# EUROPEAN PATENT APPLICATION

(11) **EP 1 892 635 A1**
(43) Date of publication of application: **27.02.2008**
(21) Application number: 06118470.1
(22) Date of filing: 04.08.2006
(51) Int. Cl.: G06F 17/30, H04L 12/58

(54) **Method and system for retrieving a document associated with a message received on a mobile device**

(71) Applicant: Research In Motion Limited, Waterloo, Ontario N2L 3W8 (CA)
(72) Inventor: Yee, Robert, Mississauga Ontario L5B 2N7 (CA)
(74) Representative: Rickard, David John

(57) **Abstract**

Embodiments are described herein relating to various components and methods that can be used to retrieve linked attachment documents that are indicated in a message received on a mobile device.

## Description

Various embodiments described herein generally relate to retrieving a document associated with a message received on a mobile device.

Typically, a mobile device user will receive a wireless message, such as a wireless e-mail message, for example, from a mail server associated with an enterprise system. In some cases, the message sender will include an attachment document and the wireless message that is received at the mobile device includes an indication that there is an attachment document. In these cases, a server associated with the enterprise system will store the attachment document and the attachment document is not initially sent with the message received at the mobile device. When the mobile device user requests the attachment document, the server will retrieve and send the attachment document to the mobile device. The user can then view or otherwise process the attachment document.

However, there are instances in which a sender sends a wireless message and, rather than include an attachment document, includes a link such as a URL (Uniform Resource Locator), a URI (Uniform Resource Identifier), a hyper-link or a LiveLink^{™} URL for example, that points to the location of the attachment document (hereafter referred to as a linked attachment document). The attachment document is located on a network such as the Internet, an Intranet, or another type of network. Conventionally, for a desktop device, a web browser can be automatically opened when the link is selected. If the link is pointing to a document (for example, http://www.myexampleurl.com/myexampledocument.doc), then the desktop's web browser can automatically choose the application to open up after it has downloaded the document (i.e. Microsoft Word, Adobe Acrobat Reader, etc.). Some of these programs are plug-ins into the web browser, so this process appears seamless. Conversely, in the case of a mobile device, the mobile device may not have the application that corresponds to the document, and may only have a message attachment viewer to view attachment documents that have been formatted to be able to be viewed or processed properly on the mobile device. Alternatively, in some cases, it may not be efficient to have the mobile device directly download the attachment document.

### GENERAL

In one aspect, at least one embodiment described herein preferably provides a method for allowing a user to request an attachment document on a mobile device, wherein the method comprises:
receiving a message on the mobile device with a linked attachment document indicator that provides a link to the location of a linked attachment document; and
providing the linked attachment document indicator and a user identifier to a linked attachment document retrieval server.

In at least some cases, the linked attachment document retrieval server may be a web server, and the method may comprise providing the linked attachment document indicator and the user identifier to a user interface provided by the web server.

In at least some cases, the linked attachment document retrieval server may be a web server, and the method may comprise sending the linked attachment document indicator and the user identifier in a request message to the web server.

In at least some cases, the linked attachment document retrieval server may be an attachment server associated with an enterprise system with which the mobile device communicates, and the method may comprise sending the linked attachment document indicator and the user identifier in a linked attachment document request to the attachment server.

In at least some cases, the method may comprise automatically generating a linked attachment document request including the linked attachment document indicator and the user identifier, and sending the linked attachment document request to the linked attachment document retrieval server when the user selects the linked attachment document indicator.

Generally, the method may also comprise receiving a second message at the mobile device from the linked attachment document retrieval server, the second message including the linked attachment document if the linked attachment document has been successfully retrieved.

In another aspect, at least one embodiment described herein preferably provides a computer program product for requesting a linked attachment document. The computer program product comprises a computer readable medium embodying program code means executable by a processor for carrying out the method of requesting an attachment document on a mobile device as specified above.

In another aspect, at least one embodiment described herein preferably provides a method for providing an attachment document, wherein the method comprises:
receiving a linked attachment document request from a user, the request including a linked attachment document indicator that provides the location of a linked attachment document and a user identifier for identifying the user;
retrieving the linked attachment document at the location specified by the linked attachment document indicator; and
sending the linked attachment document to the user based on the user identifier.

In at least some cases, if the linked attachment document is not viewable on a mobile device used by the user to review the linked attachment document, then the method may further comprise converting the linked attachment document to a format suitable for review by the user on the mobile device prior to sending the linked attachment document to the user.

In at least some cases, the method may further comprise providing a web page with input means to allow the user to provide the linked attachment document indicator and the user identifier.

In addition, or in an alternative, the method may further comprise providing an e-mail address to receive the linked attachment document request.

In at least some cases, prior to retrieving the linked attachment document, the method may comprise searching a local data store for a copy of the linked attachment document.

In at least some cases, the linked attachment document can be located on a network, and the method comprises using a network command to request the linked attachment document.

In at least some cases, the user identifier can include a user e-mail address and the method can further comprise attaching the linked attachment document to a message and sending the message to the user.

In at least some cases, the method may further comprise providing the user with an indication of the success of retrieving the linked attachment document.

In another aspect, at least one embodiment described herein may provide a computer program product for providing an attachment document. The computer program product comprises a computer readable medium embodying program code means executable by a processor for carrying out the method of providing an attachment document as specified above.

In another aspect, at least one embodiment described herein preferably provides a server for retrieving an attachment document requested by a user. The server may comprise: a communication interface being adapted to allow the server to communicate with a network; a data store; and a processor connected to the communication interface, the processor being configured to retrieve a linked attachment document based on a linked attachment document retrieval indicator provided by the user, and to provide the user with the linked attachment document based on a user identifier.

In at least some cases, the user identifier can be a user e-mail address, and the processor can be configured to generate a message based on the user e-mail address, attach the linked attachment document, and send the message to the user.

In at least some cases, the processor can be configured to search a local data store for a copy of the linked attachment document prior to retrieving the linked attachment document.

In at least some cases, the linked attached document can be located on a network and the processor can be configured to use a network command to request the linked attachment document.

In at least some cases, the server can be adapted to provide an e-mail address to receive the linked attachment document request.

In at least some cases, the server can be a web server and the processor can be configured to generate a web page with input means to allow the user to provide the linked attachment document indicator and the user identifier.

In at least some cases, the server can be contained in an enterprise system with which the user communicates.

In at least some cases, if the linked attachment document is not viewable on a mobile device used by the user to review the linked attachment document, then the processor can be further configured to convert the linked attachment document to a format suitable for review by the user on the mobile device prior to sending the linked attachment document to the user.

### BRIEF DESCRIPTION OF THE DRAWINGS

For a better understanding of the embodiments described herein and to show more clearly how they may be carried into effect, reference will now be made, by way of example only, to the accompanying drawings in which:
FIG. 1 is a block diagram of an exemplary embodiment of a mobile communication device;
FIG. 2 is a block diagram of a communication subsystem component of the mobile communication device of FIG. 1;
FIG. 3 is a block diagram of an exemplary embodiment of a node of a wireless network that the mobile communication device of FIG. 1 can communicate with;
FIG. 4 is a block diagram of an exemplary embodiment of a host system and a web server that the mobile communication device of FIG. 1 can communicate with to retrieve a linked attachment document;
FIG. 5 is an exemplary diagram of a web page that can be used to process linked attachment documents requests;
FIG. 6 is a flowchart diagram of an exemplary embodiment of a method for making a linked attachment document request;
FIG. 7 is a flowchart diagram of an exemplary embodiment of a linked attachment document retrieval method for retrieving a linked attachment document; and
FIG. 8 is a block diagram of an exemplary alternative embodiment of a host system that the mobile communication device of FIG. 1 can communicate with to retrieve a linked attachment document.

### DESCRIPTION OF PREFERRED EMBODIMENTS

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

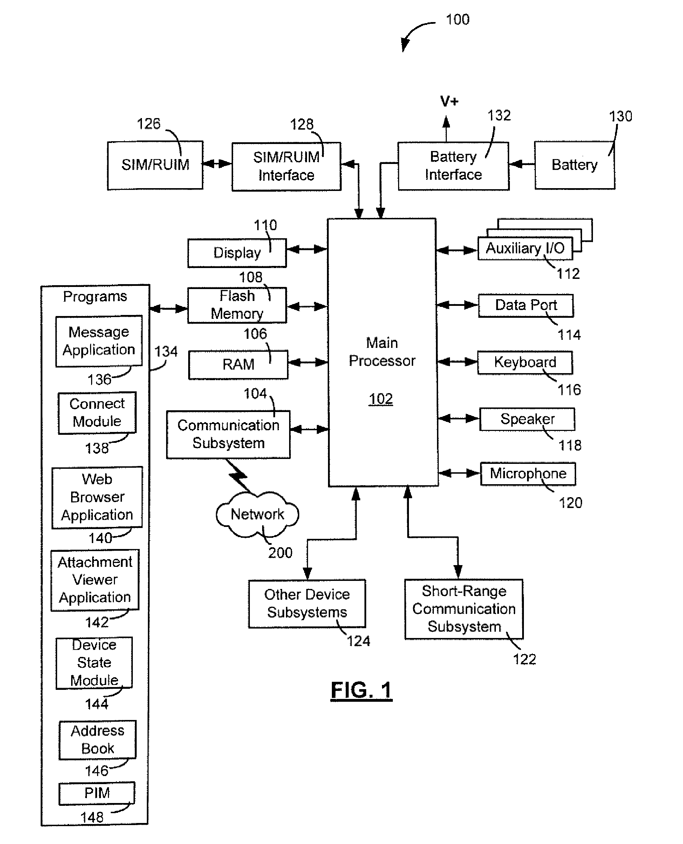

The embodiments described herein generally relate to a mobile wireless communication device, hereafter referred to as a mobile device, which can submit requests to retrieve a linked attachment document based on a linked attachment document indicator, such as a URL, URI or another suitable link that indicates the location of the linked attachment document on a network such as the Internet, an Intranet, or another type of network. In response to the request, the linked attachment document is retrieved and sent to the mobile device. The linked attachment document can be converted to a more suitable format prior to transmission to the mobile device for various reasons as will be described in greater detail below. The mobile device is a two-way communication device with advanced data communication capabilities including the capability to communicate with other mobile devices or computer systems through a network of transceiver stations. The mobile device may also have the capability to allow voice communication. Examples of applicable mobile devices include data messaging devices (with or without telephony capabilities), two-way pagers, cellular phones with data messaging capabilities, cellular smart-phones, wireless internet appliances, wireless organizers, personal digital assistants, handheld wireless communication devices, wirelessly enabled notebook computers or laptops, and the like. The techniques described herein are also applicable to desktop computers. To aid the reader in understanding the structure of the mobile device and how it communicates with other devices and host systems, reference will now be made to FIGS. 1 through 4.

Referring first to FIG. 1, shown therein is a block diagram of an exemplary embodiment of a mobile device 100. The mobile device 100 includes a number of components such as a main processor 102 that controls the overall operation of the mobile device 100. Communication functions, including data and voice communications, are performed through a communication subsystem 104. The communication subsystem 104 receives messages from and sends messages to a wireless network 200. In this exemplary embodiment of the mobile device 100, the communication subsystem 104 is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless communication link connecting the communication subsystem 104 with the wireless network 200 represents one or more different Radio Frequency (RF) channels, operating according to defined protocols specified for GSM/GPRS communications. With newer network protocols, these channels are capable of supporting both circuit switched voice communications and packet switched data communications.

Although the wireless network 200 associated with mobile device 100 is a GSM/GPRS wireless network in one exemplary implementation, other wireless networks may also be associated with the mobile device 100 in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and future third-generation (3G) networks like EDGE and UMTS. Some other examples of data-centric networks include WiFi 802.11, Mobitex^{™} and DataTAC^{™} network communication systems. Examples of other voice-centric data networks include Personal Communication Systems (PCS) networks like GSM and Time Division Multiple Access (TDMA) systems. Other network communication technologies that may be employed include, for example, Integrated Digital Enhanced Network (iDEN^{™}), Evolution-Data Optimized (EV-DO), and High Speed Downlink Packet Access (HSDPA).

The main processor 102 also interacts with additional subsystems such as a Random Access Memory (RAM) 106, a flash memory 108, a display 110, an auxiliary input/output (I/O) subsystem 112, a data port 114, a keyboard 116, a speaker 118, a microphone 120, a short-range communication subsystem 122 and other device subsystems 124.

Some of the subsystems of the mobile device 100 perform communication-related functions, whereas other subsystems may provide "resident" or on-device functions. By way of example, the display 110 and the keyboard 116 may be used for both communication-related functions, such as entering a text message for transmission over the network 200, and device-resident functions such as a calculator or task list.

The mobile device 100 can send and receive communication signals over the wireless network 200 after required network registration or activation procedures have been completed. Network access is associated with a subscriber or user of the mobile device 100. To identify a subscriber, the mobile device 100 requires a SIM/RUIM card 126 (i.e. Subscriber Identity Module or a Removable User Identity Module) to be inserted into a SIM/RUIM interface 128 in order to communicate with a network. The SIM card or RUIM 126 is one type of a conventional "smart card" that can be used to identify a subscriber of the mobile device 100 and to personalize the mobile device 100, among other things. Without the SIM card 126, the mobile device 100 is not fully operational for communication with the wireless network 200. By inserting the SIM card/RUIM 126 into the SIM/RUIM interface 128, a subscriber can access all subscribed services. Services may include: web browsing and messaging such as e-mail, voice mail, Short Message Service (SMS), and Multimedia Messaging Services (MMS). More advanced services may include: point of sale, field service and sales force automation. The SIM card/RUIM 126 includes a processor and memory for storing information. Once the SIM card/RUIM 126 is inserted into the SIM/RUIM interface 128, it is coupled to the main processor 102. In order to identify the subscriber, the SIM card/RUIM 126 can include some user parameters such as an International Mobile Subscriber Identity (IMSI). An advantage of using the SIM card/RUIM 126 is that a subscriber is not necessarily bound by any single physical mobile device. The SIM card/RUIM 126 may store additional subscriber information for a mobile device as well, including datebook (or calendar) information and recent call information. Alternatively, user identification information can also be programmed into the flash memory 108.

The mobile device 100 is a battery-powered device and includes a battery interface 132 for receiving one or more rechargeable batteries 130. In at least some embodiments, the battery 130 can be a smart battery with an embedded microprocessor. The battery interface 132 can be coupled to a regulator (not shown), which assists the battery 130 in providing power V+ to the mobile device 100. Although current technology makes use of a battery, future technologies such as micro fuel cells may provide the power to the mobile device 100.

The mobile device 100 also includes an operating system 134 and software components 136 to 148 which are described in more detail below. The operating system 134 and the software components 136 to 148 that are executed by the main processor 102 are typically stored in a persistent store such as the flash memory 108, which may alternatively be a read-only memory (ROM) or similar storage element (not shown). Those skilled in the art will appreciate that portions of the operating system 134 and the software components 136 to 148, such as specific device applications, or parts thereof, may be temporarily loaded into a volatile store such as the RAM 106. Other software components can also be included, as is well known to those skilled in the art.

The subset of software applications that control basic device operations, including data and voice communication applications, will normally be installed on the mobile device 100 during its manufacture. Other software applications include a message application 136 that can be any suitable software program that allows a user of the mobile device 100 to send and receive electronic messages. Various alternatives exist for the message application 136 as is well known to those skilled in the art. Messages that have been sent or received by the user can be stored in the flash memory 108 of the mobile device 100 or some other suitable storage element in the mobile device 100. In at least some embodiments, some of the sent and received messages may be stored remotely from the device 100 such as in a data store of an associated host system that the mobile device 100 communicates with.

In some instances, the user will receive a message with a linked attachment document, which is a document that is located on the Internet, or another network, and whose location is referenced in the message by a linked attachment document indicator such as a URL or Livelink^{™} for example, but the attachment document itself is not included. In some embodiments, the user can then request the linked attachment document by sending a message to an associated enterprise system. The user can include the link information in the message. In some embodiments, the user can simply forward the original message to the enterprise system and the enterprise system can parse the message for the link information. In some embodiments, this request may also be automated when the user engages the link in the message that points to the location of the linked attachment document. The user may engage the link by clicking on the link, selecting the link by highlighting and clicking on the link, or performing any other action to "select" the link. In some embodiments, the user can also request the linked attachment document by visiting a web page. Each of these embodiments is discussed in greater detail below.

The software applications can further include a connect module 138, a web browser application 140, an attachment viewer application 142, a device state module 144, an address book 146, a Personal Information Manager (PIM) 148, and other suitable modules (not shown).

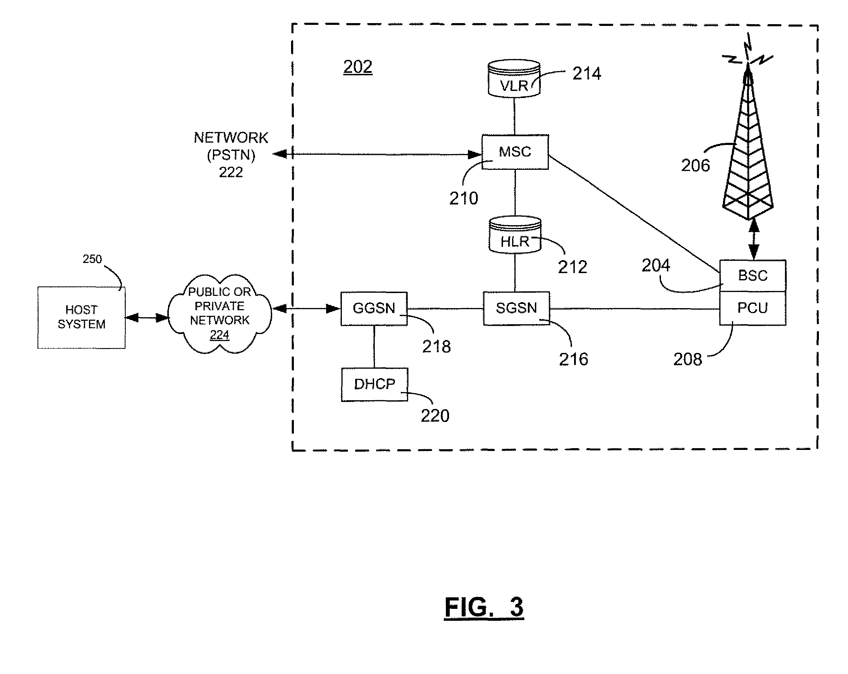

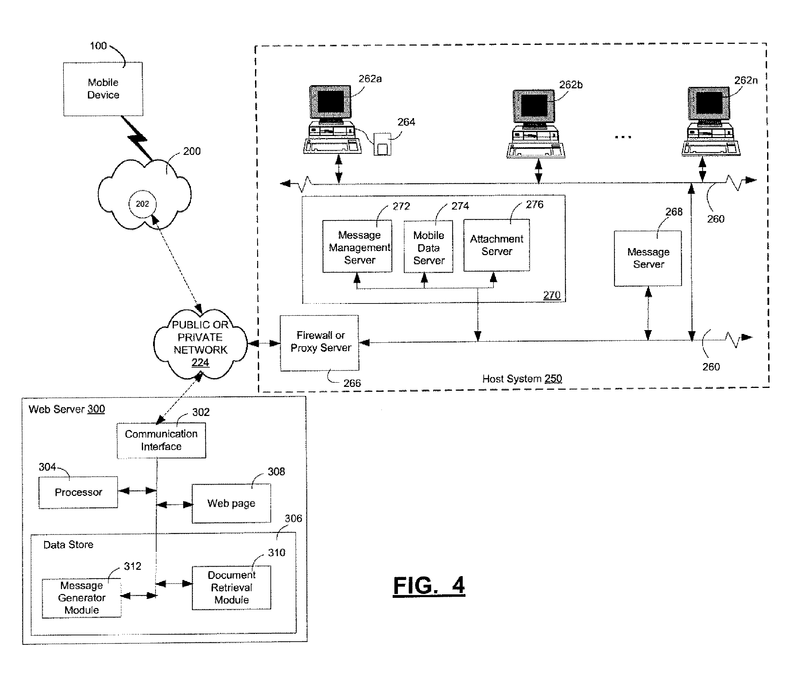

The connect module 138 implements the communication protocols that are required for the mobile device 100 to communicate with the wireless infrastructure and any host system, such as an enterprise system, that the mobile device 100 is authorized to interface with. Examples of a wireless infrastructure and an enterprise system are given in FIGS. 3 and 4, which are described in more detail below. The connect module 138 includes a set of APls that can be integrated with the mobile device 100 to allow the mobile device 100 to use any number of services associated with the enterprise system, as is commonly known by those skilled in the art. The connect module 138 allows the mobile device 100 to establish an end-to-end secure, authenticated communication pipe with the host system.

The web browser application 140 is an application that allows the user to browse or surf the Internet for various purposes, as is commonly known by those skilled in the art. In some embodiments, the user can use the web browser application 140 to visit a web site that retrieves linked attachment documents. The user can visit the web site and provide retrieval information to retrieve and receive a linked attachment document. For instance, the user can provide the link to the location of the attachment document as well as a user identifier that is associated with the user so that the linked attachment document can be retrieved and sent to the user. For example, the user identifier can be the user's e-mail address. A default option can be to invoke the web browser application 140 when the user selects the link, as described previously. In this case, the web browser application 140 can automatically open and go directly to the web site that provides this retrieval function. The web site and this linked attachment document retrieval process is described in more detail below. Other alternative embodiments can also be used to provide the same functionality. These alternative embodiments are also described in more detail below.

The attachment viewer application 142 enables the user to view or otherwise process an attachment document associated with a message received by the mobile device 100, such as a linked attachment document. In some embodiments, the attachment viewer application 142 can execute an application that can be used to view the attachment document. For instance, if the attachment document is a WORD^{™} document, then the attachment viewer application 142 can open Microsoft WORD^{™}. If the attachment document is an EXCEL^{™} spreadsheet, then the attachment viewer application 142 can open Microsoft EXCEL^{™}. If the attachment document is an audio file, then the attachment viewer 142 can open Quicktime Player^{™} or Realplayer^{™} and so on and so forth. This is provided that these applications are also loaded on the mobile device 100. In some embodiments, the attachment viewer application 142 can be a multi-platform application that can support various file formats. In some embodiments, the linked attachment document can be converted into a standard format (such as an image or PDF file, for example), which can be read and/or displayed or otherwise output by the attachment viewer application 142. Such a multi-platform application is described in a published U.S. patent application having publication number US 2002/0161796.

The device state module 144 provides persistence, i.e. the device state module 144 ensures that important device data is stored in persistent memory, such as the flash memory 108, so that the data is not lost when the mobile device 100 is turned off or loses power. The address book 146 provides information for a list of contacts for the user. For a given contact in the address book 146, the information can include the name, phone number, work address and e-mail address of the contact, among other information.

The PIM 148 includes functionality for organizing and managing data items of interest to the user, such as, but not limited to, e-mail, contacts, calendar events, voice mails, appointments, and task items. A PIM application has the ability to send and receive data items via the wireless network 200. PIM data items may be seamlessly integrated, synchronized, and updated via the wireless network 200 with the mobile device subscriber's corresponding data items stored and/or associated with a host computer system. This functionality creates a mirrored host computer on the mobile device 100 with respect to such items. This can be particularly advantageous when the host computer system is the mobile device subscriber's office computer system.

Other types of software applications and modules can also be installed on the mobile device 100. For instance, a configuration module (not shown) as well as other modules that can be used in conjunction with the SIM/RUIM interface 128 can be included. The other types of software applications can include third party applications, which are added after the manufacture of the mobile device 100. Examples of third party applications include games, calculators, utilities, etc.

The additional applications can be loaded onto the mobile device 100 through at least one of the wireless network 200, the auxiliary I/O subsystem 112, the data port 114, the short-range communications subsystem 122, or any other suitable device subsystem 124. This flexibility in application installation increases the functionality of the mobile device 100 and may provide enhanced on-device functions, communication-related functions, or both. For example, secure communication applications may enable electronic commerce functions and other such financial transactions to be performed using the mobile device 100.

The data port 114 enables a subscriber to set preferences through an external device or software application and extends the capabilities of the mobile device 100 by providing for information or software downloads to the mobile device 100 other than through a wireless communication network. The alternate download path may, for example, be used to load an encryption key onto the mobile device 100 through a direct and thus reliable and trusted connection to provide secure device communication.

The data port 114 can be any suitable port that enables data communication between the mobile device 100 and another computing device. The data port 114 can be a serial or a parallel port. In some instances, the data port 114 can be a USB port that includes data lines for data transfer and a supply line that can provide a charging current to charge the battery 130 of the mobile device 100.

The short-range communication subsystem 122 provides for communication between the mobile device 100 and different systems or devices, without the use of the wireless network 200. For example, the subsystem 122 may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an e-mail message, or web page download will be processed by the communication subsystem 104 and input to the main processor 102. The main processor 102 will then process the received signal for output to the display 110 or alternatively to the auxiliary I/O subsystem 112. A subscriber may also compose data items, such as e-mail messages, for example, using the keyboard 116 in conjunction with the display 110 and possibly the auxiliary I/O subsystem 112. The auxiliary subsystem 112 may include devices such as: a touch screen, mouse, track ball, infrared fingerprint detector, or a roller wheel with dynamic button pressing capability. The keyboard 116 is preferably an alphanumeric keyboard and/or telephone-type keypad. However, other types of keyboards may also be used. A composed item may be transmitted over the wireless network 200 through the communication subsystem 104.

For voice communications, the overall operation of the mobile device 100 is substantially similar, except that the received signals are output to the speaker 118, and signals for transmission are generated by the microphone 120. Alternative voice or audio I/O subsystems, such as a voice message recording subsystem, can also be implemented on the mobile device 100. Although voice or audio signal output is accomplished primarily through the speaker 118, the display 110 can also be used to provide additional information such as the identity of a calling party, duration of a voice call, or other voice call related information.

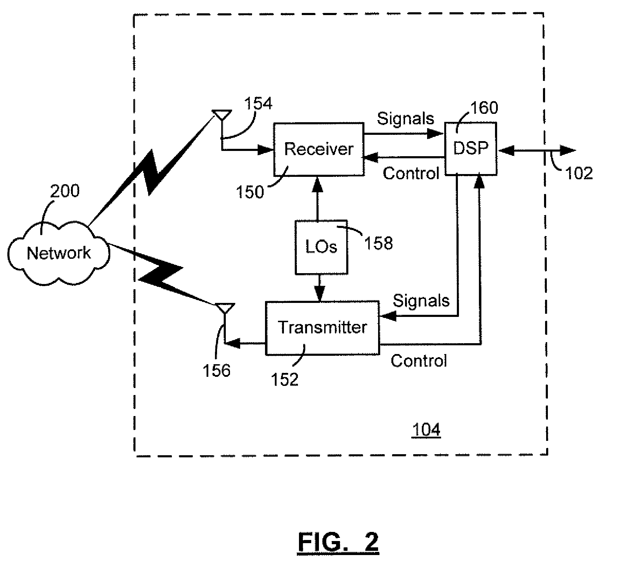

Referring now to FIG. 2, an exemplary block diagram of the communication subsystem component 104 is shown. The communication subsystem 104 includes a receiver 150, a transmitter 152, as well as associated components such as one or more embedded or internal antenna elements 154 and 156, Local Oscillators (LOs) 158, and a processing module such as a Digital Signal Processor (DSP) 160. The particular design of the communication subsystem 104 is dependent upon the communication network 200 with which the mobile device 100 is intended to operate. Thus, it should be understood that the design illustrated in FIG. 2 serves only as one example.

Signals received by the antenna 154 through the wireless network 200 are input to the receiver 150, which may perform such common receiver functions as signal amplification, frequency down conversion, filtering, channel selection, and analog-to-digital (A/D) conversion. A/D conversion of a received signal allows more complex communication functions such as demodulation and decoding to be performed in the DSP 160. In a similar manner, signals to be transmitted are processed, including modulation and encoding, by the DSP 160. These DSP-processed signals are input to the transmitter 152 for digital-to-analog (D/A) conversion, frequency up conversion, filtering, amplification and transmission over the wireless network 200 via the antenna 156. The DSP 160 not only processes communication signals, but also provides for receiver and transmitter control. For example, the gains applied to communication signals in the receiver 150 and the transmitter 152 may be adaptively controlled through automatic gain control algorithms implemented in the DSP 160.

The wireless link between the mobile device 100 and the wireless network 200 can contain one or more different channels, typically different RF channels, and associated protocols used between the mobile device 100 and the wireless network 200. An RF channel is a limited resource that must be conserved, typically due to limits in overall bandwidth and limited battery power of the mobile device 100.

When the mobile device 100 is fully operational, the transmitter 152 is typically keyed or turned on only when it is transmitting to the wireless network 200 and is otherwise turned off to conserve resources. Similarly, the receiver 150 is periodically turned off to conserve power until it is needed to receive signals or information (if at all) during designated time periods.

Referring now to FIG. 3, a block diagram of an exemplary implementation of a node 202 of the wireless network 200 is shown. In practice, the wireless network 200 comprises one or more nodes 202. In conjunction with the connect module 138, the mobile device 100 can communicate with the node 202 within the wireless network 200. In the exemplary implementation of FIG. 3, the node 202 is configured in accordance with General Packet Radio Service (GPRS) and Global Systems for Mobile (GSM) technologies. The node 202 includes a base station controller (BSC) 204 with an associated tower station 206, a Packet Control Unit (PCU) 208 added for GPRS support in GSM, a Mobile Switching Center (MSC) 210, a Home Location Register (HLR) 212, a Visitor Location Registry (VLR) 214, a Serving GPRS Support Node (SGSN) 216, a Gateway GPRS Support Node (GGSN) 218, and a Dynamic Host Configuration Protocol (DHCP) 220. This list of components is not meant to be an exhaustive list of the components of every node 202 within a GSM/GPRS network, but rather a list of components that are commonly used in communications through the network 200.

In a GSM network, the MSC 210 is coupled to the BSC 204 and to a landline network, such as a Public Switched Telephone Network (PSTN) 222 to satisfy circuit switched requirements. The connection through the PCU 208, the SGSN 216 and the GGSN 218 to a public or private network (Internet) 224 (also referred to herein generally as a shared network infrastructure) represents the data path for GPRS capable mobile devices. In a GSM network extended with GPRS capabilities, the BSC 204 also contains the Packet Control Unit (PCU) 208 that connects to the SGSN 216 to control segmentation, radio channel allocation and to satisfy packet switched requirements. To track the location of the mobile device 100 and availability for both circuit switched and packet switched management, the HLR 212 is shared between the MSC 210 and the SGSN 216. Access to the VLR 214 is controlled by the MSC 210.

The station 206 is a fixed transceiver station and together with the BSC 204 form fixed transceiver equipment. The fixed transceiver equipment provides wireless network coverage for a particular coverage area commonly referred to as a "cell". The fixed transceiver equipment transmits communication signals to and receives communication signals from mobile devices within its cell via the station 206. The fixed transceiver equipment normally performs such functions as modulation and possibly encoding and/or encryption of signals to be transmitted to the mobile device 100 in accordance with particular, usually predetermined, communication protocols and parameters, under control of its controller. The fixed transceiver equipment similarly demodulates and possibly decodes and decrypts, if necessary, any communication signals received from the mobile device 100 within its cell. Communication protocols and parameters may vary between different nodes. For example, one node may employ a different modulation scheme and operate at different frequencies than other nodes.

For all mobile devices 100 registered with a specific network, permanent configuration data such as a user profile is stored in the HLR 212. The HLR 212 also contains location information for each registered mobile device and can be queried to determine the current location of a mobile device. The MSC 210 is responsible for a group of location areas and stores the data of the mobile devices currently in its area of responsibility in the VLR 214. Further, the VLR 214 also contains information on mobile devices that are visiting other networks. The information in the VLR 214 includes part of the permanent mobile device data transmitted from the HLR 212 to the VLR 214 for faster access. By moving additional information from a remote HLR 212 node to the VLR 214, the amount of traffic between these nodes can be reduced so that voice and data services can be provided with faster response times and at the same time requiring less use of computing resources.

The SGSN 216 and the GGSN 218 are elements added for GPRS support; namely packet switched data support, within GSM. The SGSN 216 and the MSC 210 have similar responsibilities within the wireless network 200 by keeping track of the location of each mobile device 100. The SGSN 216 also performs security functions and access control for data traffic on the wireless network 200. The GGSN 218 provides internetworking connections with external packet switched networks and connects to one or more SGSN's 216 via an Internet Protocol (IP) backbone network operated within the network 200. During normal operations, a given mobile device 100 must perform a "GPRS Attach" to acquire an IP address and to access data services. This requirement is not present in circuit switched voice channels as Integrated Services Digital Network (ISDN) addresses are used for routing incoming and outgoing calls. Currently, all GPRS capable networks use private, dynamically assigned IP addresses, thus requiring the DHCP server 220 connected to the GGSN 218. There are many mechanisms for dynamic IP assignment, including using a combination of a Remote Authentication Dial-In User Service (RADIUS) server and a DHCP server. Once the GPRS Attach is complete, a logical connection is established from a mobile device 100, through the PCU 208, and the SGSN 216 to an Access Point Node (APN) within the GGSN 218. The APN represents a logical end of an IP tunnel that can either access direct Internet compatible services or private network connections. The APN also represents a security mechanism for the network 200, insofar as each mobile device 100 must be assigned to one or more APNs and mobile devices 100 cannot exchange data without first performing a GPRS Attach to an APN that it has been authorized to use. The APN may be considered to be similar to an Internet domain name such as "myconnection.wireless.com".

Once the GPRS Attach operation is complete, a tunnel is created and all traffic is exchanged within standard IP packets using any protocol that can be supported in IP packets. This includes tunneling methods such as IP over IP as in the case with some IPSecurity (IPsec) connections used with Virtual Private Networks (VPN). These tunnels are also referred to as Packet Data Protocol (PDP) Contexts and there are a limited number of these available in the network 200. To maximize use of the PDP Contexts, the network 200 can run an idle timer for each PDP Context to determine if there is a lack of activity. When a mobile device 100 is not using its PDP Context, the PDP Context can be de-allocated and the IP address returned to the IP address pool managed by the DHCP server 220.

Referring now to FIG. 4, shown therein is a block diagram illustrating various components of an exemplary configuration of a host system 250 that the mobile device 100 can communicate with in conjunction with the connect module 138. The host system 250 will typically be a corporate enterprise or other local area network (LAN), but may also be a home office computer or some other private system, for example, in variant implementations. In this example shown in FIG. 4, the host system 250 is depicted as a LAN of an organization to which a user of the mobile device 100 belongs. Typically, a plurality of mobile devices can communicate wirelessly with the host system 250 through one or more nodes 202 of the wireless network 200.

The host system 250 comprises a number of network components connected to each other by network connections 260. For instance, a user's desktop computer 262a with an accompanying cradle 264 for the user's mobile device 100 is situated on a LAN connection. The cradle 264 for the mobile device 100 can be coupled to the computer 262a by a serial or a Universal Serial Bus (USB) connection, for example. Other user computers 262b-262n are also situated on the network 260, and each may or may not be equipped with an accompanying cradle 264. The cradle 264 facilitates the loading of information (e.g. PIM data, private symmetric encryption keys to facilitate secure communications) from the user computer 262a to the mobile device 100, and may be particularly useful for bulk information updates often performed in initializing the mobile device 100 for use. The information downloaded to the mobile device 100 may include certificates used in the exchange of messages.

It will be understood by persons skilled in the art that the user computers 262a-262n will typically also be connected to other peripheral devices, such as printers, etc. which are not explicitly shown in FIG. 4. Furthermore, only a subset of network components of the host system 250 are shown in FIG. 4 for ease of exposition, and it will be understood by persons skilled in the art that the host system 250 will comprise additional components that are not explicitly shown in FIG. 4 for this exemplary configuration. More generally, the host system 250 may represent a smaller part of a larger network (not shown) of the organization, and may comprise different components and/or be arranged in different topologies than that shown in the exemplary embodiment of FIG. 4.

To facilitate the operation of the mobile device 100 and the wireless communication of messages and message-related data between the mobile device 100 and components of the host system 250, a number of wireless communication support components 270 are provided. The wireless communication support components 270 generally include a message management server 272, a mobile data server 274, and an attachment server 276. The support components 270 also include a data store (not shown), which may or may not be part of one of the servers. Other components may also be included, as is well known to those skilled in the art.

In this exemplary embodiment, the mobile device 100 communicates with the host system 250 through node 202 of the wireless network 200 and a shared network infrastructure 224 such as a service provider network or the public Internet. Access to the host system 250 may be provided through one or more routers (not shown), and computing devices of the host system 250 may operate from behind a firewall or proxy server 266. The proxy server 266 provides a secure node and a wireless internet gateway for the host system 250. The proxy server 266 intelligently routes data to the correct destination server within the host system 250.

In some implementations, the host system 250 can include a wireless VPN router (not shown) to facilitate data exchange between the host system 250 and the mobile device 100. The wireless VPN router allows a VPN connection to be established directly through a specific wireless network to the mobile device 100. The wireless VPN router can be used with the Internet Protocol (IP) Version 6 (IPV6) and IP-based wireless networks. This protocol can provide enough IP addresses so that each mobile device has a dedicated IP address, making it possible to push information to a mobile device at any time. An advantage of using a wireless VPN router is that it can be an off-the-shelf VPN component, and does not require a separate wireless gateway and separate wireless infrastructure. A VPN connection can preferably be a Transmission Control Protocol (TCP)/IP or User Datagram Protocol (UDP)/IP connection for delivering the messages directly to the mobile device 100 in this alternative implementation.

Messages intended for a user of the mobile device 100 are initially received by a message server 268 of the host system 250. Such messages may originate from any number of sources. For instance, a message may have been sent by a sender from the computer 262b within the host system 250, from a different mobile device (not shown) connected to the wireless network 200 or a different wireless network, or from a different computing device, or other device capable of sending messages, via the shared network infrastructure 224, possibly through an application service provider (ASP) or Internet service provider (ISP), for example.

The message server 268 typically acts as the primary interface for the exchange of messages, particularly e-mail messages, within the organization and over the shared network infrastructure 224. Each user in the organization that has been set up to send and receive messages is typically associated with a user account managed by the message server 268. Some exemplary implementations of the message server 268 include a Microsoft Exchange^{™} server, a Lotus Domino^{™} server, a Novell Groupwise^{™} server, or another suitable mail server installed in a corporate environment. In some implementations, the host system 250 may comprise multiple message servers 268. The message server 268 may also be adapted to provide additional functions beyond message management, including the management of data associated with calendars and task lists, for example.

When messages are received by the message server 268, they are typically stored in a data store (not shown) associated with the message server 268. In at least some embodiments, the data store may be a separate hardware unit, such as data store 284, that the message server 268 communicates with. Messages can be subsequently retrieved and delivered to users by accessing the message server 268. For instance, an e-mail client application operating on a user's computer 262a may request the e-mail messages associated with that user's account stored on the data store associated with the message server 268. These messages are then retrieved from the data store and stored locally on the computer 262a. The data store associated with the message server 268 can store copies of each message that is locally stored on the mobile device 100. Alternatively, the data store associated with the message server 268 can store all of the messages for the user of the mobile device 100 and only a smaller number of messages can be stored on the mobile device 100 to conserve memory. For instance, the most recent messages (i.e. those received in the past two to three months for example) can be stored on the mobile device 100.

When operating the mobile device 100, the user may wish to have e-mail messages retrieved for delivery to the mobile device 100. The message application 136 operating on the mobile device 100 may also request messages associated with the user's account from the message server 268. The message application 136 may be configured (either by the user or by an administrator, possibly in accordance with an organization's information technology (IT) policy) to make this request at the direction of the user, at some pre-defined time interval, or upon the occurrence of some pre-defined event. In some implementations, the mobile device 100 is assigned its own e-mail address, and messages addressed specifically to the mobile device 100 are automatically redirected to the mobile device 100 as they are received by the message server 268.

The message management server 272 can be used to specifically provide support for the management of messages, such as e-mail messages, that are to be handled by mobile devices. Generally, while messages are still stored on the message server 268, the message management server 272 can be used to control when, if, and how messages are sent to the mobile device 100. The message management server 272 also facilitates the handling of messages composed on the mobile device 100, which are sent to the message server 268 for subsequent delivery.

For example, the message management server 272 may monitor the user's "mailbox" (e.g. the message store associated with the user's account on the message server 268) for new e-mail messages, and apply user-definable filters to new messages to determine if and how the messages are relayed to the user's mobile device 100. The message management server 272 may also compress and encrypt new messages (e.g. using an encryption technique such as Data Encryption Standard (DES) or Triple DES) and push them to the mobile device 100 via the shared network infrastructure 224 and the wireless network 200. The message management server 272 may also receive messages composed on the mobile device 100 (e.g. encrypted using Triple DES), decrypt and decompress the composed messages, re-format the composed messages if desired so that they will appear to have originated from the user's computer 262a, and re-route the composed messages to the message server 268 for delivery.

Certain properties or restrictions associated with messages that are to be sent from and/or received by the mobile device 100 can be defined (e.g. by an administrator in accordance with IT policy) and enforced by the message management server 272. These may include whether the mobile device 100 may receive encrypted and/or signed messages, minimum encryption key sizes, whether outgoing messages must be encrypted and/or signed, and whether copies of all secure messages sent from the mobile device 100 are to be sent to a pre-defined copy address, for example.

The message management server 272 may also be adapted to provide other control functions, such as only pushing certain message information or pre-defined portions (e.g. "blocks") of a message stored on the message server 268 to the mobile device 100. For example, in some cases, when a message is initially retrieved by the mobile device 100 from the message server 268, the message management server 272 may push only the first part of a message to the mobile device 100, with the part being of a pre-defined size (e.g. 2 KB). The user can then request that more of the message be delivered in similar-sized blocks by the message management server 272 to the mobile device 100, possibly up to a maximum pre-defined message size. Accordingly, the message management server 272 facilitates better control over the type of data and the amount of data that is communicated to the mobile device 100, and can help to minimize potential waste of bandwidth or other resources.

The mobile data server 274 can encompass any other server that stores information that is relevant to the corporation. The mobile data server 274 may include, but is not limited to, databases, online data document repositories, customer relationship management (CRM) systems, or enterprise resource planning (ERP) applications. Accordingly, the mobile data server 274 can provide the mobile device 100 with wireless access to corporate data, and enterprise applications. The mobile data server 274 can also provide Internet access to the mobile device. Alternatively, internet access may be provided to the mobile device 100 through another means such as an internet gateway which can be provided by a network provider, for example.

The attachment server 276 receives requests from the mobile devices 100 to perform functions for e-mails that have an associated attachment document. These functions can include providing the full version of an attachment document, and/or providing a table of contents for the attachment document (when applicable). The attachment server 276 can process many different types of documents such as Microsoft Office^{™} documents including Word, Excel and PowerPoint documents, as well as image, sound, vector and hybrid content files. In cases in which the linked attachment document cannot be viewed on the mobile device 100 in its current form, the attachment server 276 can also convert the linked attachment document into a format that is readable by the attachment viewer application 142 on the mobile device 100. Alternatively, in some embodiments, there can be instances in which the attachment server 276 can also convert the linked attachment document into a format that is more optimized for transfer to the mobile device 100. Published U.S. patent application 2002/0161796 describes an attachment server that provides both of these functions. Alternatively, other document conversion techniques that are known to those skilled in the art can be used. The message server 268 and the message management server 272 can communicate with the attachment server 276 when e-mails are received with attachment documents that require such processing.

Typically, an e-mail is received with an attachment document at the message server 268, and this e-mail is sent to the recipient mobile device with an indication of an attachment document. The user of the mobile device can then request the attachment document, or a version of the attachment document from the attachment server 276. Once the attachment server 276 obtains a copy of the selected attachment document, which can be in the data store associated with the message server 268, the attachment server 278, in conjunction with at least one of the message server 268 and the message management server 272, can then send the attachment document through the firewall 266 and at least one of the networks 200 and 224 to the mobile device of the user who made the request. Alternatively, the attachment server 276 can process the attachment document and then send the processed attachment document to the mobile device. In an alternative embodiment, the attachment server 276 can also retrieve linked attachment documents. This is described in greater detail below.

It will be understood by persons skilled in the art that the message management server 272, the mobile data server 274, and the attachment server 276 do not need to be implemented on separate physical servers within the host system 250. For example, some or all of the functions associated with the message management server 272 may be integrated with the message server 268, or some other server in the host system 250. Alternatively, the host system 250 may comprise multiple message management servers 272, particularly in variant implementations where a large number of mobile devices need to be supported.

As mentioned previously, the mobile device 100 can receive a message with a linked attachment document indicator that indicates the location of the linked attachment document. The linked attachment document indicator can be a URL link, a URI link, a hyper-link, or a LiveLink^{™}, and the like. The user of the mobile device 100 can make a linked attachment document request to receive the linked attachment document. This can be done in several ways. Firstly, as shown in FIG. 4, the requesting user can access a web server 300 through a user interface such as a web page 308 to make this request. Alternatively, the requesting user can send the request to the attachment server 276 which can then send the request to the web server 300. In another alternative, the requesting user can send the request to an attachment server 276', which can then process the request. In each of these cases, the web server 300 and the attachment server 276' can be generally referred to as a linked attachment document retrieval server. Each of these embodiments will now be discussed.

The web server 300 includes a communication interface 302, a processor 304, a data store 306, a web page interface 308, a document retrieval module 310 and a message generator module 312. The web server 300 may also include the functionality of an SMTP server (by the message generator module 312 for example), or may be connected to an SMTP server (not shown) for sending messages to, and receiving messages from, the networks 200 and 224. Alternatively, the web server 300 may also include, or may also be connected to, any other suitable mail server (not shown), for sending and receiving messages, or include a software module that is able to send e-mails over a private/public network, as is commonly known by those skilled in the art.

It should be noted that the processor 304 can execute computer code for generating an instantiation of the web page 308. Further, the document retrieval module 310 and the message generator module 312 can generally be implemented via computer code, and stored on the data store 306. The processor 304 can execute the computer code for carrying out the functionality of the modules 310 and 312. Furthermore, the functionality of the document retrieval module 310 and the message generator module 312 may be combined or otherwise implemented by the web server 300.

The processor 302 generally controls the operation of the web server 300 and executes functions related to processing linked attachment document requests as described below. Any suitable processor can be used. The communication interface 302 allows the web server 300 to communicate with the various components of the networks 200 and 224, the host system 250, and the mobile devices 100. The communication interface 302 can be a network interface card that connects to a network that can connect to an Internet Service Provider (ISP) via a high speed T1 connection, for example. Alternatively, the communication interface 302 can be a modem, such as a DSL or cable modem that is connected to the ISP. The data store 306 can store computer code for functions used for processing linked attachment documents requests. Any suitable memory element can be used for the data store 306. Those skilled in the art are knowledgeable in implementing these various components. Other components may also be included as is well known to those skilled in the art.

The user interface can be a web page or website that is provided by the web server 300 and can be accessed by the requesting user on the Internet. The requesting user can use the web browser application 140 on the mobile device 100 to access the webpage via the mobile data server 274. The requesting user can then provide the linked attachment document indicator and a user identifier to request the retrieval of the linked attachment document.

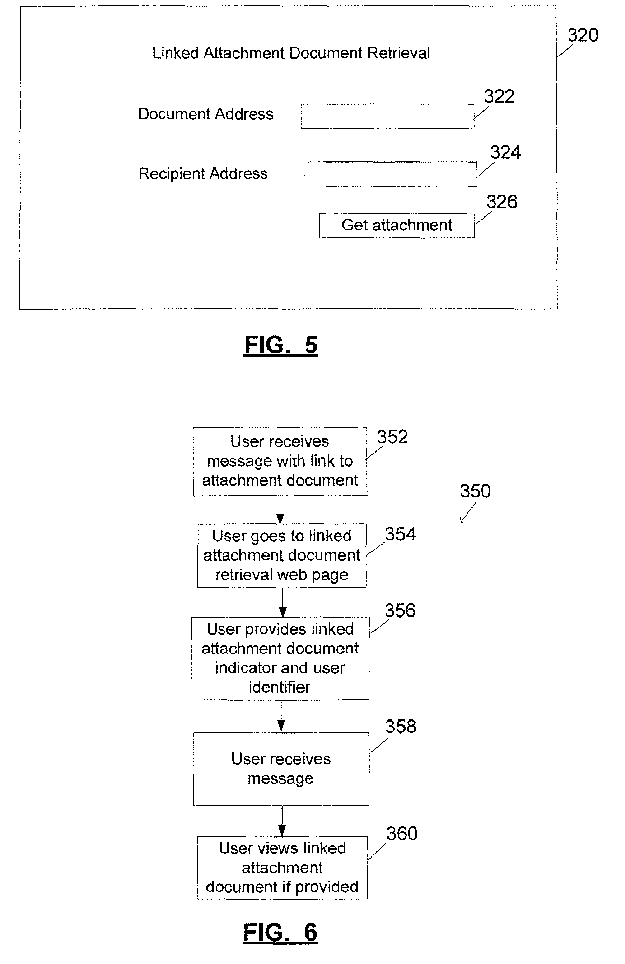

Referring now to FIG. 5, shown therein is an example of a web page 320 that can be used to retrieve linked attachment documents. The web page 320 can be a generic input form and includes a text entry box 322 for receiving a document address, which is the linked attachment document indicator (i.e. a URL link, and the like), that points to the location of the linked attachment document. The web page 320 also includes a text entry box 324 for receiving a user address, which is the user identifier that identifies the requesting user who wants to retrieve a linked attachment document. The user identifier can be associated with the mobile device that is used by the requesting user and can be the requesting user's e-mail address, the PIN address of the mobile device, and the like.

The web server 300 can be an Apache web server, a Java web server, or another appropriate server. The web server 300 can utilize dynamic web servlets, such as Java server pages or Tomcat, to implement the user interface (i.e. web page) 308, as well as the functionality of the document retrieval and message generator modules 310 and 312. Upon submission of the linked attachment document indicator and the user identifier, the document retrieval module 310 will request the linked attachment document from the specified location. The linked attachment document can then be saved in the data store 306 and cached. The message generator module 312 can then create a message, attach the linked attachment document and send the message to the user based on the user identifier. These operations are described in more detail below.

Referring now to FIG. 6, shown therein is a flowchart diagram of an exemplary embodiment of a method 350 for a linked attachment document request. At step 352, a user receives a message with a linked attachment document indicator. At step 354, the user uses the web browser application 140 and goes to a linked attachment document retrieval web page to retrieve the linked attachment document. In alternative embodiments, the user may interact with the attachment server 276 to retrieve the linked attachment document as described in more detail below.

At step 356, the user enters the linked attachment document indicator, and the user identifier into text entry boxes 322 and 324 provided on the web page 308. The web server 300 then processes the linked attachment document request and attempts to retrieve the linked attachment document. Once processing has finished, the web server 300 can provide a status web page or send a message to the requesting user that indicates whether the retrieval process was successful or unsuccessful.

At step 358, the web server 300 sends a message to the requesting user with the linked attachment document if the retrieval process was successful. The message is received by the message server 268 of the host system 250. The message server 268 can interact with the attachment server 276 to convert or optimize the linked attachment document if either function is required. The message server then sends the linked attachment document, or a processing version of the linked attachment document (if conversion or optimization took place) to the requesting user's mobile device. Alternatively, the host system 250 may send a message to the requesting user indicating that retrieval was successful and asking if the requesting user wishes to receive the linked attachment document. If the retrieval process was not successful, then the web server 300 can indicate this in the message. If the retrieval process was successful, once the user receives the linked attachment document (or a processed version thereof), the user can view the linked attachment document using the attachment viewer application 142 or otherwise process the linked attachment document at step 360.

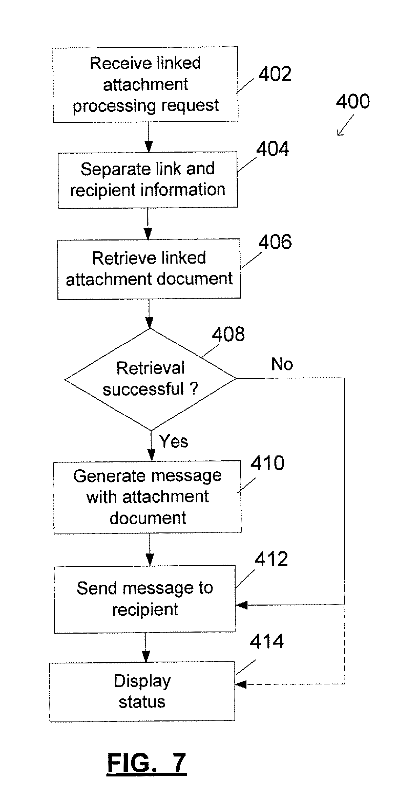

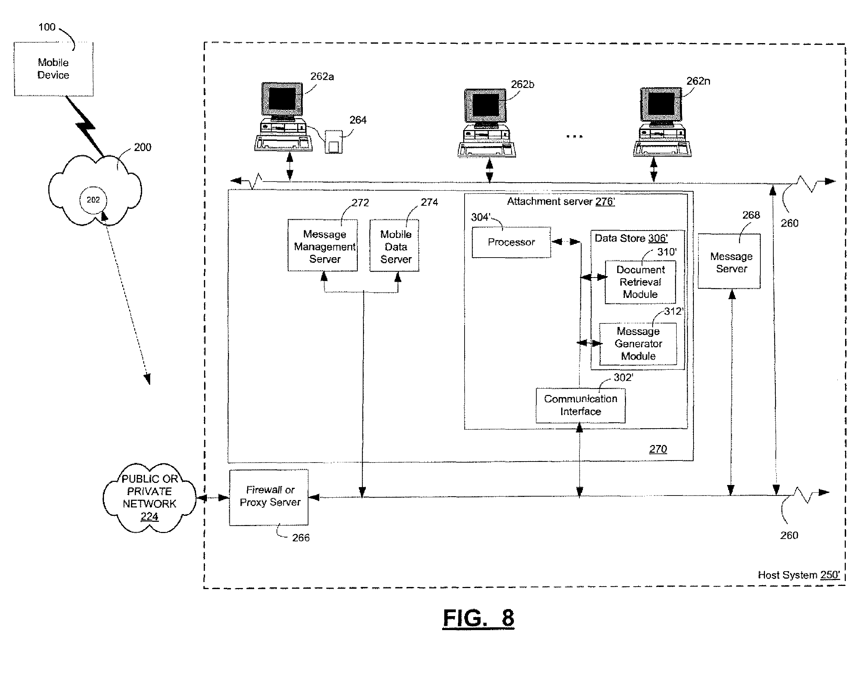

Referring now to FIG. 7, shown therein is a flowchart diagram of an exemplary embodiment of a linked attachment document retrieval method 400 that can be carried out by a linked attachment document retrieval server. In this example, this server is the web server 300, but in other embodiments can be the attachment server 276' as is described in more detail below in relation to FIG. 8. At step 402, the web server 300 receives a linked attachment document processing request from a requesting user. This request can be made when the requesting user visits the linked attachment document retrieval web page 320, enters a linked attachment document indicator and a user identifier, and instructs the web server 300 to retrieve the linked attachment document by, for example, clicking on, or otherwise actuating or selecting the get attachment document button 326. In alternative embodiments, this request can also be made to the attachment server as described in more detail below.

At step 404, the web server 300 can separate the linked attachment document indicator and the user identifier, and provide the document retrieval module 310 with the linked attachment document indicator. At step 406, the document retrieval module 310 then searches for the linked attachment document. The document retrieval module 310 can first optionally search the data store 306 to see if a local copy of the linked attachment document already exists, due to a previous linked attachment document processing request. If a local copy is not searched for or not found, then the document retrieval module 310 can retrieve the linked attachment document according to the Hyper-Text Transfer Protocol (HTTP), TCP/IP, ftp or another suitable network protocol by sending appropriate commands through the communication interface 302 to at least one of the networks 200, 224 and 260, as the case may be, to retrieve the linked attachment document. The document retrieval module 310 can handle a variety of different file types such as text-based files, image files, sound files, video files, binary executable files, and the like. Accordingly, the document retrieval module 310 can retrieve the linked attachment document for a wide a variety of different formats including binary formats.

At step 408, if the retrieval is successful, the linked attachment document can then be saved in the data store 306 and cached. Alternatively, the linked attachment document can be sent directly to the message generator module 312.

Alternatively, if the retrieval was not successful, the method 400 can move to step 412 in which a message can be sent to the user indicating that retrieval was not successful. Alternatively, the method 400 can move to step 414 in which the web server 300 displays a status web page that indicates that retrieval of the linked attachment document has failed.

At step 410, the message generator module 312 can create a message, attach the linked attachment document and send the message to the requesting user based on the user identifier. The header and body of the message can be customized appropriately. The header can include information on the recipient, the sender, the subject, and the like. The message can be generated in a suitable message format, such as MIME format, and transmitted or transferred according to the Simple Mail Transfer Protocol (SMTP) so that the web server 300 can communicate with a remote mail server. Alternatively, other suitable protocols may also be used for message generation and transmission.

Before the linked attachment document is sent to the mobile device 100 of the requesting user, the message generator module 312 can encode the linked attachment document before attaching it to the message. A header can be added to the attached file to indicate the type of data contained in the file and the encoding method used. The appropriate decoding can be performed by the mail server at the host system 250 or the attachment server 276, or by an appropriate component on the mobile device 100 such as the attachment viewer application 142, for example. The message generator module 312 can use the Multipurpose Internet Mail Extensions ("MIME") protocol, which encodes files using binary-to-ASCII encoding. BASE 64 encoding can also be used which converts binary data to ASCII text format. BASE 64 encoding can handle certain data formats that cannot be handled by SMTP, such as converting image data to a text format. Other possible encoding techniques that may be used include secure MIME encoding, UUcoding, BinHex, and the like, as is commonly known by those skilled in the art.

The web server 300 can then initiate an SMTP session and send a message to the mail server associated with the requesting user that made the request (in this example message server 268), so that the message can then be sent to the user. As mentioned previously, the linked attachment document can be converted or optimized to a more suitable format if needed. The host system 250 can deliver the message to the requesting user's mobile device, with either the original linked attachment document or a processed version thereof. Alternatively, the host system 250 can simply send a message to the user indicating that the linked attachment document has been received, and the user can then retrieve the linked attachment document from the host system 250 whenever they choose.

At step 414, the web server 300 can display a status web page to show whether retrieval was successful or unsuccessful. This step is optional since retrieval success can also be indicated within the message sent to the requesting user's mobile device. For failed retrieval attempts, the message does not include the linked attachment document.

In an alternative embodiment, rather than have the requesting user visit the web page 308, the requesting user can send a request for the linked attachment document to a server at the host system 250 which can interact with the web page 308, such as the message server or the attachment server 276. In either case, the mobile data server 274 can then be used to access the web page 308 to provide the linked attachment document indicator and the user identifier to the web server 300, and request the linked attachment document as previously described. The requesting user can send the request to the appropriate server at the host system 250 by sending a wireless message with a subject or title to indicate a request for the retrieval of a linked attachment document. The requesting user also includes the linked attachment document indicator and the user identifier. Alternatively, the user identifier need not be explicitly given since this can be obtained from the identity of the user that sent the message. Accordingly, in a sense, the user identifier is still included in the message and is indicated by the message sender (i.e. the user identifier can be in the "FROM" address field of the message). In another alternative, rather than send a separate message, the requesting user can forward the original message that was received at the mobile device 100 (which included the linked attachment document indicator) to the appropriate server at the host system 250. The appropriate server can then parse the message to obtain the linked attachment document indicator and the identity of the requesting user, and submit the information to the web server 300.

In another alternative embodiment, the web server 300 can also provide a dedicated e-mail address and receive request messages for retrieving linked attachment documents rather than having a requesting user visit the web page 308. In this case, the requesting user can include the linked attachment document indicator and the user identifier in the body of the request message. Alternatively, rather than having to provide the user identifier, the web server 300 can obtain the identity of the requesting user based on the user who sent the message. The message can be sent to the web server 300 via the message server 268. The web server 300 then retrieves the linked attachment document as described previously.

In another alternative embodiment, the functionality provided by the web server 300 can be provided by attachment server 276'. Referring now to FIG. 8, shown therein is a block diagram of an exemplary embodiment of a host system 250' with which the requesting user can communicate by using the mobile device 100 to retrieve a linked attachment document. The attachment server 276' can include the same components as the web server 300 as shown in FIG. 8 and accordingly can operate in a similar fashion. The requesting user can send a message to the attachment server 276' requesting the linked attachment document as described previously; i.e. by creating a new message and providing the linked attachment document indicator and possibly a user identifier, or by forwarding the message received at the mobile device which included the linked attachment document indicator. The attachment server 276' can provide a dedicated e-mail address to receive request messages. The document retrieval module 310' can then search the data store 306' to determine if the linked attachment document has already been retrieved due to a previous request. If the linked attachment document has not already been retrieved, then the document retrieval module 310' can send appropriate network commands, as described previously for the web server 300, via the communication interface 302' to at least one of the networks 200, 224 and 260, as the case may be, to retrieve the linked attachment document. If the linked attachment document is successfully retrieved, the message generator module 312' can then generate a message with the retrieved linked attachment document and send the message to the requesting user by operating in conjunction with the message server 268 and the message management server 272. Alternatively, the attachment server can send a processed version (i.e. converted or optimized) of the linked attachment document rather than the original linked attachment document if needed. If the linked attachment document cannot be retrieved, then the attachment server 276' can send an appropriate message to the requesting user indicating retrieval failure.

In yet another alternative embodiment, the appropriate modules on the mobile device 100, such as the message application 136, the attachment viewer module 142, and the like is configured to allow the user to select the linked attachment document indicator by, for example, highlighting the linked attachment document indicator and selecting a menu item to "silently" send a linked attachment document request to the appropriate server, such as the attachment server 276 or 276', or the web sever 300 when the web server 300 provides a dedicated e-mail address. The request automatically contains the required information for the linked attachment document indicator and the user identifier. This eliminates the need for the user to browse an interface page, or otherwise submit the request manually.

It should be understood that various modifications can be made to the embodiments described and illustrated herein, without departing from the embodiments, the general scope of which is defined in the appended claims.

## Claims

1. A method for allowing a user to request an attachment document on a mobile device, wherein the method comprises:
receiving a message on the mobile device with a linked attachment document indicator that provides a link to the location of a linked attachment document; and
providing the linked attachment document indicator and a user identifier to a linked attachment document retrieval server.

2. The method of claim 1, wherein the linked attachment document retrieval server is a web server, and the method comprises providing the linked attachment document indicator and the user identifier to a user interface provided by the web server.

3. The method of claim 1, wherein the linked attachment document retrieval server is a web server, and the method comprises sending the linked attachment document indicator and the user identifier in a request message to the web server.

4. The method of claim 1, wherein the linked attachment document retrieval server is an attachment server associated with an enterprise system with which the mobile device communicates, and the method comprises sending the linked attachment document indicator and the user identifier in a linked attachment document request to the attachment server.

5. The method of claim 1, wherein the method comprises automatically generating a linked attachment document request comprising the linked attachment document indicator and the user identifier, and sending the linked attachment document request to the linked attachment document retrieval server when the user selects the linked attachment document indicator.

6. The method of any one of claims 2 to 5, wherein the method comprises receiving a second message at the mobile device from the linked attachment document retrieval server, the second message comprising the linked attachment document if the linked attachment document has been successfully retrieved.

7. A computer program product for requesting a linked attachment document, the computer program product comprising a computer readable medium embodying program code means executable by a processor for causing a computing device to carry out the method of any one of claims 1 to 6.

8. A method for providing an attachment document, wherein the method comprises:
receiving a linked attachment document request from a user, the request comprising a linked attachment document indicator that provides the location of a linked attachment document and a user identifier for identifying the user;
retrieving the linked attachment document at the location specified by the linked attachment document indicator; and
sending the linked attachment document to the user based on the user identifier.

9. The method of claim 8, wherein if the linked attachment document is not viewable on a mobile device used by the user to review the linked attachment document, then the method further comprises converting the linked attachment document to a format suitable for review by the user on the mobile device prior to sending the linked attachment document to the user.

10. The method of claim 8 or claim 9, wherein the method further comprises providing a web page with input means to allow the user to provide the linked attachment document indicator and the user identifier.

11. The method of claim 8 or claim 9, wherein the method further comprises providing an e-mail address to receive the linked attachment document request.

12. The method of any one of claims 8 to 11, wherein prior to retrieving the linked attachment document, the method comprises searching a local data store for a copy of the linked attachment document.

13. The method of any one of claims 8 to 12, wherein the linked attachment document is located on a network, and the method comprises using a network command to request the linked attachment document.

14. The method of any one of claims 8 to 13, wherein the user identifier comprises a user e-mail address and the method further comprises attaching the linked attachment document to a message and sending the message to the user.

15. The method of any one of claims 8 to 14, wherein the method further comprises providing the user with an indication of the success of retrieving the linked attachment document.

16. A computer program product for providing an attachment document, the computer program product comprising a computer readable medium embodying program code means executable by a processor for causing a computing device or system to carry out the method of any one of claims 8 to 15.

17. A server for retrieving an attachment document requested by a user, wherein the server comprises:
a communication interface being adapted to allow the server to communicate with a network;
a data store; and
a processor connected to the communication interface, the processor being configured to retrieve a linked attachment document based on a linked attachment document retrieval indicator provided by the user, and to provide the user with the linked attachment document based on a user identifier.

18. The server as claimed in claim 17, wherein the user identifier is a user e-mail address, and the processor is configured to generate a message based on the user e-mail address, attach the linked attachment document, and send the message to the user.

19. The server as claimed in any one of claims 17 or claim 18, wherein prior to retrieving the linked attachment document, the processor is configured to search a local data store for a copy of the linked attachment document.

20. The server as claimed in any one of claims 17 to 19, wherein the linked attached document is located on a network and the processor is configured to use a network command to request the linked attachment document.

21. The server as claimed in any one of claims 17 to 20, wherein the server is adapted to provide an e-mail address to receive the linked attachment document request.

22. The server as claimed in any one of claims 17 to 20, wherein the server is a web server and the processor is configured to generate a web page with input means to allow the user to provide the linked attachment document indicator and the user identifier.

23. The server as claimed in any one of claims 17 to 22, wherein the server is contained within an enterprise system with which the user communicates.

24. The server as claimed in any one of claims 17 to 23, wherein if the linked attachment document is not viewable on a mobile device used by the user to review the linked attachment document, then the processor is further configured to convert the linked attachment document to a format suitable for review by the user on the mobile device prior to sending the linked attachment document to the user.

25. A mobile device for allowing a user to request an attachment document, wherein the mobile device comprises:
means for receiving a message on the mobile device with a linked attachment document indicator that provides a link to the location of a linked attachment document; and
means for providing the linked attachment document indicator and a user identifier to a linked attachment document retrieval server.

26. A communications system comprising the server of any one of claims 17 to 24 and a plurality of mobile devices according to claim 25.

## Amended claims

### Amended claims in accordance with Rule 137(2) EPC.

**1.** A method for providing an attachment document to a user of a mobile device (100) that receives a message with a linked attachment document indicator that provides a link to a location of a linked attachment document, wherein the method comprises:
receiving a linked attachment document request from the user, the request comprising the linked attachment document indicator and a user identifier for identifying the user;
retrieving the linked attachment document at the location specified by the linked attachment document indicator; and
sending the linked attachment document to the user based on the user identifier.

**2.** The method of claim 1, wherein if the linked attachment document is not viewable on the mobile device (100) used by the user to review the linked attachment document, then the method further comprises converting the linked attachment document to a format suitable for review by the user on the mobile device (100) prior to sending the linked attachment document to the user.

**3.** The method of claim 1 or claim 2, wherein the method further comprises providing a web page (320) with input means to allow the user to provide the linked attachment document indicator and the user identifier.

**4.** The method of claim 3, wherein the method further comprises providing first and second text entry boxes (322, 324) as the input means, the first text entry box (322) being adapted to receive the linked attachment document indicator and the second text entry box (324) being adapted to receive the user identifier.

**5.** The method of claim 1 or claim 2, wherein the method further comprises providing an e-mail address to receive the linked attachment document request from the user.

**6.** The method of any one of claims 1 to 5, wherein prior to retrieving the linked attachment document, the method comprises searching a local data store (306, 306') for a copy of the linked attachment document.

**7.** The method of any one of claims 1 to 6, wherein the linked attachment document is located on a network, and the method comprises using a network command to request the linked attachment document.

**8.** The method of any one of claims 1 to 7, wherein the user identifier comprises a user e-mail address and the method further comprises attaching the linked attachment document to a message and sending the message to the user via the user e-mail address.

**9.** The method of any one of claims 1 to 8, wherein the method further comprises providing the user with an indication of the success of retrieving the linked attachment document.

**10.** A computer program product for providing an attachment document, the computer program product comprising a computer readable medium embodying program code means executable by a processor (304, 304') for causing a computing device or system (300, 276') to carry out the method of any one of claims 1 to 9.

**11.** A server (300, 276') for retrieving an attachment document requested by a user of a mobile device (100) that receives a message with a linked attachment document indicator that provides a link to a location of the linked attachment document, wherein the server (300, 276') comprises:
a communication interface (302, 286) being adapted to allow the server (300, 276') to communicate with a network (200, 224);
a data store (306, 306'); and
a processor (304, 304') connected to the communication interface (302, 286), the processor (304, 304') being configured to retrieve the linked attachment document based on the linked attachment document indicator provided by the user, and to provide the user with the linked attachment document based on a user identifier.

**12.** The server (300, 276') as claimed in claim 11, wherein the user identifier is a user e-mail address, and the processor (304, 304') is configured to generate a message based on the user e-mail address, attach the linked attachment document, and send the message to the user.

**13.** The server (300, 276') as claimed in any one of claims 12 to 13, wherein prior to retrieving the linked attachment document, the processor (304, 304') is configured to search a local data store (306, 306') for a copy of the linked attachment document.

**14.** The server (300, 276') as claimed in any one of claims 11 to 13, wherein the linked attached document is located on a network and the processor (304, 304') is configured to use a network command to request the linked attachment document.

**15.** The server (300, 276') as claimed in any one of claims 11 to 14, wherein the server (300, 276') is adapted to provide an e-mail address to receive the request of the user.

**16.** The server (300) as claimed in any one of claims 11 to 15, wherein the server (300) is a web server (300) and the processor (304) is configured to generate a web page (320) with input means to allow the user to provide the linked attachment document indicator and the user identifier.

**17.** The server (300) as claimed in claim 16, wherein the input means comprises a first text entry box (322) adapted to receive the linked attachment document indicator and a second text entry box (324) adapted to receive the user identifier.

**18.** The server (276') as claimed in any one of claims 11 to 17, wherein the server (276') is contained within an enterprise system (250) with which the user communicates.

**19.** The server (300, 276') as claimed in any one of claims 11 to 18, wherein if the linked attachment document is not viewable on the mobile device used by the user to review the linked attachment document, then the processor (300, 276') is further configured to convert the linked attachment document to a format suitable for review by the user on the mobile device (100) prior to sending the linked attachment document to the user.

**20.** A communications system comprising the server (300, 276') of any one of claims 11 to 19 and a plurality of mobile devices (100), wherein at least one of the mobile devices (100) comprises means (136, 138) for receiving a message with the linked attachment document indicator; and means (136, 138, 140) for providing the linked attachment document indicator and the user identifier to the server (300, 276').
